# EUROPEAN PATENT SPECIFICATION

(11) **EP 1 554 100 B1**
(45) Date of publication and mention of the grant of the patent: **17.01.2007**
(21) Application number: 03758400.0
(22) Date of filing: 24.10.2003
(51) Int. Cl.: B29C 45/14, B29C 51/26

(54) **METHOD TO PRODUCE POLYURETHANE ARTICLES AND RELATIVE DEVICE**
VERFAHREN ZUR HERSTELLUNG VON POLYURETHANGEGENSTÄNDEN UND VORRICHTUNG DAFÜR
PROCEDE DE PRODUCTION D'ARTICLES EN POLYURETHANNE, ET DISPOSITIF CORRESPONDANT

(30) Priority: 25.10.2002 IT UD20020222
(43) Date of publication of application: 20.07.2005
(73) Proprietor: G.M.P. SPA, 31046 Oderzo (IT)
(72) Inventor: DAMO, Mario, I-31046 ODERZO (IT)
(74) Representative: Petraz, Davide Luigi
(86) International application number: PCT/IB2003/004700
(87) International publication number: WO 2004/037511

(56) References cited:
- EP-A- 0 101 095
- EP-A- 0 551 526
- WO-A-02/20239
- DE-B- 1 147 029
- US-A- 5 800 771
- PATENT ABSTRACTS OF JAPAN vol. 011, no. 263 (M-619), 26 August 1987 (1987-08-26) -& JP 62 066909 A (MAZDA MOTOR CORP), 26 March 1987 (1987-03-26)
- PATENT ABSTRACTS OF JAPAN vol. 010, no. 018 (M-448), 24 January 1986 (1986-01-24) -& JP 60 176731 A (INOUE EMU TEE PII KK), 10 September 1985 (1985-09-10)

## Description

### FIELD OF THE INVENTION

The present invention concerns a method to produce polyurethane articles, covered on one or more sides with one or more decorative and protective films, normally made of thermoplastic material.

The invention also concerns a device comprising a molding apparatus and at least a heating assembly which, in a position outside the molding apparatus and before the definitive thermoforming operation that takes place in the mold, carries out a treatment to heat and pre-form at least a segment of film in order to improve the quality of the final product, increase the flexibility of the process and reduce the overall times of the cycle.

In the method according to the invention the steps of thermoforming the decorative film(s) and of injecting/molding the polyurethane material are preceded by at least a heating step and at least partial pre-molding of the decorative thermoplastic film.

The invention is applied in the field of molding articles of polyurethane material, such as small pieces of furniture, wings, panels for automatic distributing machines or electric appliances, containers, car panels, car hoods or suchlike.

### BACKGROUND OF THE INVENTION

Various methods are known to produce polyurethane articles, which are finding ever more varied applications in many fields of use.

An example of such methods is described in the international patent application WO-A-02/20239, in the name of the present Applicant, according to which, at least on one visible face of the polyurethane article, a decorative film, normally consisting of a thin film of thermoplastic material, is applied to cover and at least partly protect the article.

The method described in said patent application provides to position the film, outside the mold, on a plane ring-nut support, to insert said ring-nut support into the mold, to thermoform the film by means of contact with the punch of the partly closed mold, to close the mold and to inject the polyurethane inside the mold.

Although it is extremely efficacious in terms of obtaining a covered article, finished in every part, in a single step, and with a considerable automation of all the operations in the process, this method has a disadvantage due to the fact that it needs a relatively long waiting time for the decorative film to be heated and thermoformed.

Moreover, the time required to heat the film is added to the time required for thermoforming, since it is not possible to even partly superimpose these two distinct operations, which are performed by the same molding apparatus.

Furthermore, by carrying out the heating using the punch of the mold, there is a low calorie yield in the transmission of heat, since the punch cannot exceed the polymerization temperature of the polyurethane. This puts a limit also on the types of materials which can be used, both of polyurethane for the article and of thermoplastics for the film. Moreover, the geometry of the punch considerably limits the efficacy of a correct and possibly diversified diffusion of the temperature on the surface of the film, due to the presence of ribs or ridges on the figure.

In the state of the art there are known solutions which provide to heat a covering film for articles made of plastic material before they are introduced into the mold. For example, EP-A-0.551.526 describes a method to mold a multilayer article made of thermoplastic resin, wherein a covering sheet is pre-heated by means of a pre-heating panel. The panel can integrally incorporate a heating source or the heating source can be an element distinct from the panel.

The panel has holes, which affect the aesthetic figure, communicating with a pipe connected to a vacuum line by means of a valve, in order to retain the skin on the surface of the panel. Once the skin has been heated to the desired temperature, the panel is transferred between the elements of the mold to be rested on its lower part or its upper part. By bringing the panel into contact with a perimeter part of one element of the mold, blowing air and at the same time sucking in by means of holes made in the face of the mold, the skin is transferred from the pre-heating panel to the mold. When transfer has been completed, the panel is taken outside the mold again so that a new sheet of skin can be picked up. Then, the mold closes and the thermoplastic resin is injected into the molding cavity.

EP-A-0.101.095 describes a method and a device for injecting molded articles, at the same time forming designs on their surface.

US-A-5.800.771 teaches to apply a film bearing a decorative design on a face of a molded article; before being inserted into the mold, the film is heated outside the mold on a heating table. The film is held on the table by suction holes. Then the film is transferred to the female part of the mold by means of vacuum means. Then the elements of the mold are closed and the resin is injected into the molding cavity. The heating table has a specific holding frame and includes means to maintain the film under tension, preventing the formation of creases or wrinkles.

Document JP-A-62-264919 describes a process wherein a hot plane is used that has suction holes over its whole surface, in order to retain a sheet of resin on which a decorative pattern is impressed. The sheet of resin is then transferred inside a mold that is then closed and the resin is injected inside the mold to form the article.

EP-A-0.584.042 describes a method to apply a colored covering to a molded article, wherein a colored sheet is taken from a transfer plate, which possibly pre-heats it, and inserted inside a mold, to which it is transferred by means of vacuum means. Document JP-A-62066909 discloses a method in accordance with the preamble of claim 1 and a device in accordance with the preamble of Claim 13.

These state of the art solutions have various disadvantages in terms of operating efficiency and quality of the final product obtained. In the first place, they do not provide that, during the heating step that precedes the introduction into the mold, the thermoplastic film can be subjected to actions of partial deformation, intended to reduce the time taken for the subsequent thermoforming that takes place inside the mold. In second place, these known solutions use suction means with holes that are generally included in the part of the film that covers the figure of the article, leaving marks and imprints which lower the final quality of the article. Furthermore, the transfer of the film from the heating plane or table to the elements of the mold is not functional and not efficient, often requiring the intervention of mechanical film-presses which, apart from being complex and sometimes rather unreliable, can lower the quality of the covered article.

Applicant has studied, devised and embodied the present invention to overcome these shortcomings of the state of the art and to obtain other advantages.

### SUMMARY OF THE INVENTION

The present invention is set forth and characterized in the main claims 1 and 13, while the dependent claims describe other innovative characteristics of the invention.

One purpose of the invention is to achieve a method and a device to produce polyurethane articles wherein, thanks to the heating of the segments of film made at least partly outside the mold, it is possible to reduce the overall times of the cycle, to increase the thermoformability and characteristics of size and quality of the decorative films applied, and to completely separate the heating process from the process of polymerizing the polyurethane.

Another purpose is to achieve a device wherein the means to heat the decorative film have a high yield in transferring heat, great simplicity, both in terms of construction and also in terms of maintenance and replacement of parts, and also high versatility and adaptability to various operating situations.

A further purpose is to allow the transport and positioning of the segment of film inside the press in any position whatsoever, either horizontal, vertical or inclined, also using robotic gripping and handling systems.

The invention is applied in the production of polyurethane articles of the type covered on at least one side by at least a decorative film, normally consisting of a thermoplastic film whose thickness can vary from a minimum of 0.2 mm to a maximum of 3 mm and more.

The device according to the invention is of the type comprising one or more molds, each one provided with at least a first part and at least a second part defining between them a cavity inside which polyurethane material is introduced.

The device according to the invention also comprises a heating assembly, movable and equipped with at least a heating element suitable to heat at least a segment of said film in a position at least partly outside the mold, and to position the at least one heated segment of film in cooperation with said first or second part of said mold.

The heating assembly comprises a bearing structure for a substantially plane heating element and a specific frame which supports anchor means in order to associate the segment of film at least temporarily to the heating element.

The bearing structure is of the so-called universal type, that is to say, adaptable for a plurality of films of different type and size, while the specific frame is replaced every time that the type of film used is changed.

According to a characteristic of the invention, the specific frame is equipped with vacuum means suitable to carry out a pre-forming of the segment of film; in other words, during heating, the film is subjected to a shaping in order to form it which on the one hand facilitates and simplifies its coupling with one or the other of the elements of the mold, and on the other hand reduces the time required to carry out and complete the thermoforming inside the mold.

The vacuum means that achieve said pre-forming, according to a preferential embodiment of the invention, are all arranged outside the portion of the segment of film that will be applied on the figure of the article. In other words, the vacuum is made to act only on the perimeter portion of the segment of film which, when it is applied on the article, is outside the figure and, when the cycle is completed, is trimmed and then eliminated.

In this way, on the one hand, the method guarantees an effective pre-forming, without bubbles, starting from the center of the segment of film towards its periphery, and on the other hand it prevents the formation of imprints or marks on the portion of film coinciding with the figure of the article.

According to a variant, there is an insulating element between the heating element and the specific frame.

In a first form of embodiment, specific for single-film articles made in a closed mold, the device is also provided with ring-nut means movable between a first position outside the mold and a second position at least partly superimposed on the perimeter of one part of the mold in order to cooperate with the latter during the molding of said polyurethane material. In this case, the heating assembly is movable between a first position outside the mold, wherein it at least partly performs the heating and the forming of the segment of film, and a second position inside the mold, wherein it positions the segment of heated film in cooperation with the ring-nut means in order to complete the forming step.

In a second form of embodiment, specific for double-film articles made in an open mold, the device according to the invention has a mold with two parts, hinged together, which close like a book so as to define the molding cavity. In this embodiment, the heating assembly can assume a first position wherein it heats, pre-forms upwards and positions a first segment of film in cooperation with a part of the mold, and a second position wherein it heats and positions a second segment of film in cooperation with the other part of the mold.

In a third form of embodiment, specific for single-film articles made in an open mold, the device according to the invention has a mold in which the two parts are separate and free from each other, and are superimposed so as to define the molding cavity. In this embodiment the heating assembly is movable between a first position outside the mold, wherein it performs the heating step and at least a partial pre-forming upwards of the segment of film, and a second position inside the mold, wherein it positions the heated segment of film in cooperation with one of the parts of the mold.

In all the forms of embodiment, the segment of film is heated and partly thermoformed, or pre-formed, before the step of definitive thermoforming and molding which occurs inside the mold, so that, when it is coupled with one of the parts of the mold, it has increased characteristics of formability and coupling to the relative inner walls.

Moreover, when the heating and pre-forming of the segment of film take place outside the mold, it is possible to perform these steps while injection is taking place, and hence the polymerization of the polyurethane inside the mold, in order to produce an article covered with a segment of film already prepared and heated in the previous cycle; in this way the waiting time, which would otherwise be wasted, is used to start the heating of the film for the following article, and therefore the overall time of the cycle is reduced.

The heating assembly can be of any known type and is not part of the molding apparatus; according to the invention, depending on the type of material or on the thickness of the film, it is possible, with the heating assembly, to regulate the heating temperature in a desired manner so as to optimize the transfer of heat and the overall yield of the entire apparatus. According to the invention, the heating temperature can be regulated to assume differentiated values in different zones of the segment of film, so as to increase the precision of the heating operation especially at the most critical forming points.

According to a variant, the anchor means and/or the frame and/or the possible ring-nut means are equipped with means able to create a vacuum zone between the elements in reciprocal contact. In this way, the usual mechanical retaining means are eliminated, which allows to reduce the bulk of the device, guaranteeing an optimum grip on the film during the entire molding cycle without risk of ruining the surface thereof.

According to another variant, the frame of the heating assembly comprises means which, when the heating assembly is inside the mold, allow to release the vacuum holding the film, for example by introducing ambient air. This allows to increase the speed of thermoforming, prevents any possible cooling of the film and improves the efficacy and quality of the forming itself.

According to another variant, the specific frame of the heating assembly has a perimeter profile of the anti-slip type in order to prevent movements of the segment of film during the thermoforming. In a preferential embodiment, the perimeter profile comprises at least a hollow, a tooth or a combination of hollows and teeth, suitably shaped.

According to a variant, there are several molds in line, operating in sequence and having the same characteristics as the embodiments described above, in order to obtain a greater productivity.

### BRIEF DESCRIPTION OF THE DRAWINGS

These and other characteristics of the present invention will be apparent from the following description of some preferential forms of embodiment, given as a non-restrictive example with reference to the attached drawings wherein:
- fig. 1: shows a cross section of a first form of embodiment of part of the device to produce polyurethane articles, with the single-film, closed mold technique, according to the present invention in an operative forming step;
- - figs. 2a to 2c: show a cross section, in three distinct steps of the cycle, of a heating assembly of the device in fig. 1;
- - fig. 3: shows an enlarged detail of fig. 1;
- - figs. 4a to 4h: show the production cycle of polyurethane articles of the device in fig. 1;
- - fig. 5: shows a second form of embodiment, with the double-film technique, of part of the device according to the invention;
- - figs. 6a to 6h: show the production cycle of the device in fig. 5;
- - fig. 7: shows a variant of a step in the cycle shown in figs. 6a to 6h;
- - fig. 8: shows a third form of embodiment, with the single-film, open mold technique, of part of the device shown in fig. 1;
- - figs. 9a to 9f: show the production cycle of the device in fig. 8.

### DETAILED DESCRIPTION OF SOME PREFERENTIAL FORMS OF EMBODIMENT OF THE INVENTION

In the figures from 1 to 4h, the reference number 10 denotes generally a first form of embodiment of a molding device according to the invention to produce polyurethane articles 37.

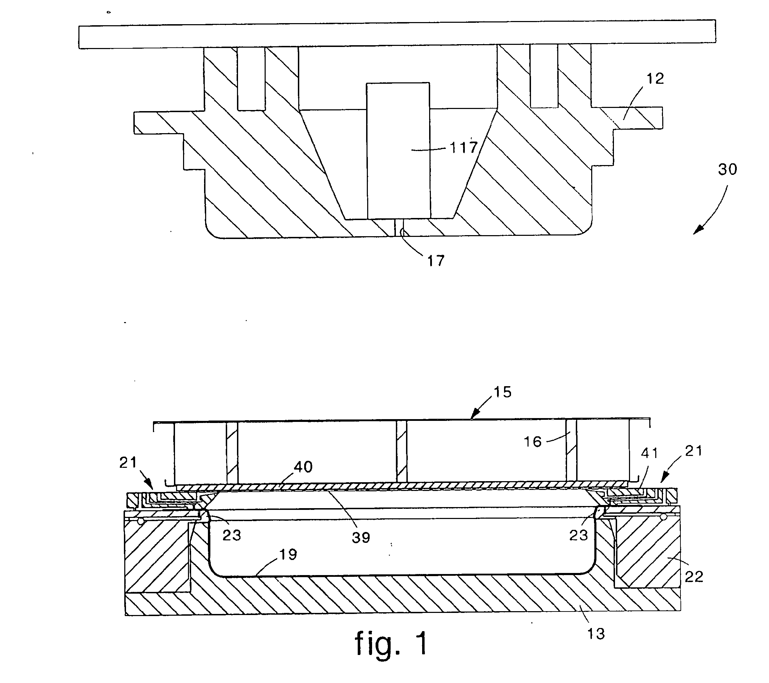

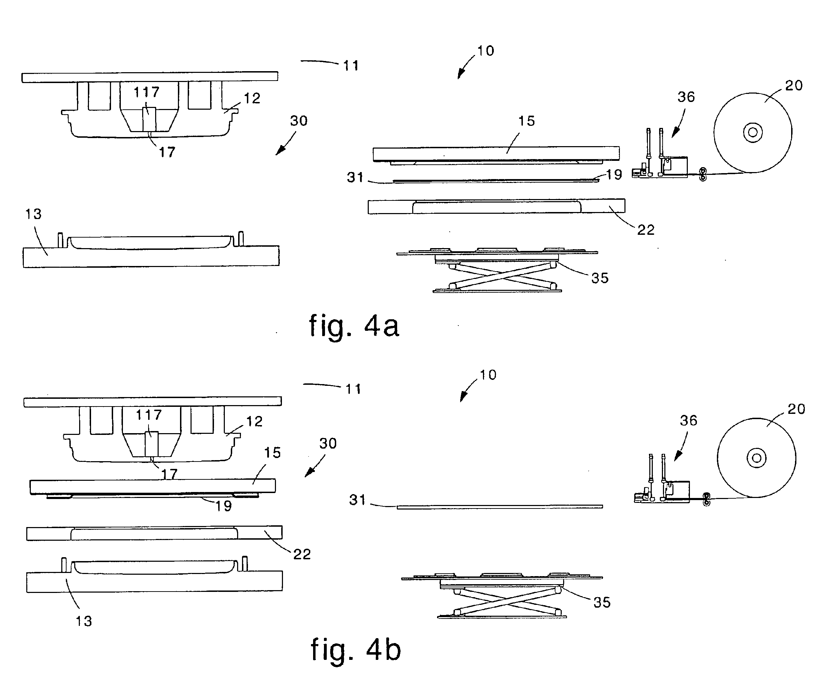

The device 10 comprises a molding apparatus 30 (figs. 1 and 4a) consisting in this case of a female part 13, or matrix, and a male part 12, or punch, associated with a press element 11, partly shown in fig. 4a, which can be driven to open/close by means of movement actuators which are not shown here. It comes within the field of the invention that the molding apparatus 30 consists of two female parts, two male parts, or other suitable configurations.

The male part 12, in this case in a substantially central position, has an injection channel 17, associated with an injection head 117, through which expanded polyurethane is injected, when the mold is closed, into a molding cavity 28 defined between male part 12 and female part 13.

It is obvious that, within the field of the invention, the injection channel 17 could be located in a non-central position, or there could be two or more injection channels, possibly used alternately.

In this case, the molding device 10 comprises reel means 20 able to feed a thermoformable covering film 19 which is then inserted into the mold 30 and made to adhere by thermoforming, as will be explained in more detail later, so as to cover the inner wall of the female part 13.

The film 19 is made of thermoplastic.

The device 10 also comprises a heating assembly 15 movable between a first position outside the mold 30 and a second position, wherein it is taken into association with the female part 13 of the mold 30. The function of the heating assembly 15 is to heat and pre-form the segment of film 19 outside the mold 30, and to then transport said segment of film 19 inside the mold 30, in order to complete the thermoforming and discharge the segment of film 19 onto the female part 13, or possibly on the male part, of the mold 30.

In the specific embodiment shown here, and as can be seen in greater detail in fig. 1, the device 10 also comprises an annular ring-nut 22, of the movable type, having a front perimeter edge 23 which, when the ring-nut 22 is coupled with the female part 13 of the mold 30, is facing towards the molding cavity 28. The front edge 23 is suitable to perform a function of continuity substantially in correspondence with the separation zone which forms, when the mold is closed, between the female part 13 and the male part 12 of the mold.

In this way, the article 37 can be discharged from the mold 30 substantially already finished, and only requires perimeter trimming of any possible excess film 19.

The annular ring-nut 22 is moved in coordination, or not, with the heating assembly 15, to insert and form the film 19 in the mold 30 and then to discharge the finished polyurethane article 37 from the mold 30.

The cycle to move the heating assembly 15 and the ring-nut 22, in order to mold a polyurethane article 37, is shown in figs. 4a to 4h.

The device 10 also comprises discharge means 35 able to discharge the finished article 37 from the ring-nut 22, and means 36 arranged downstream of the reel 20, to unwind and cut the film 19, and able to position a segment of film 19 on a supporting plane 31.

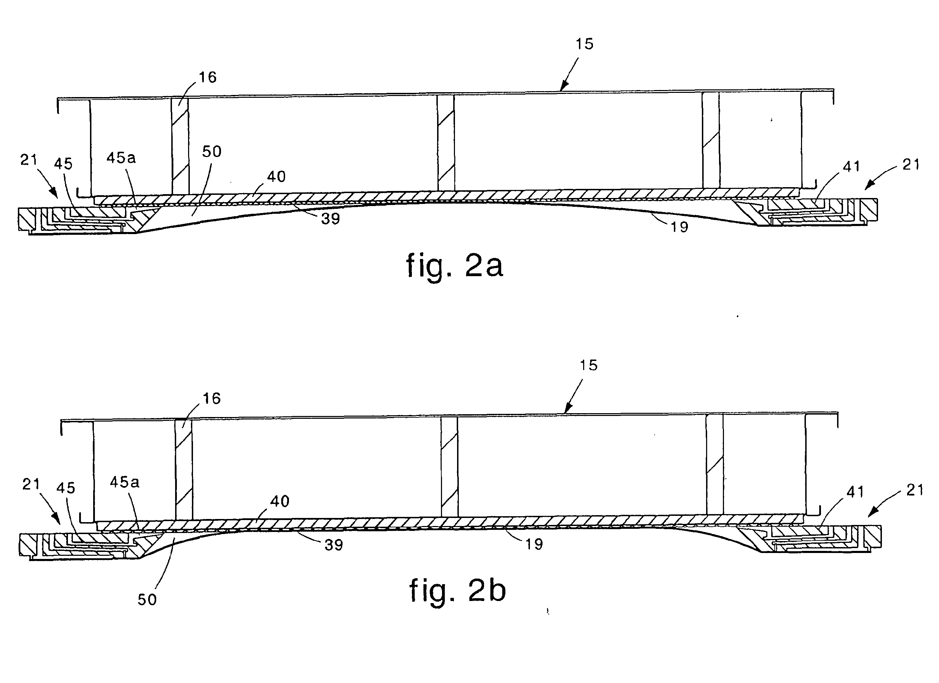

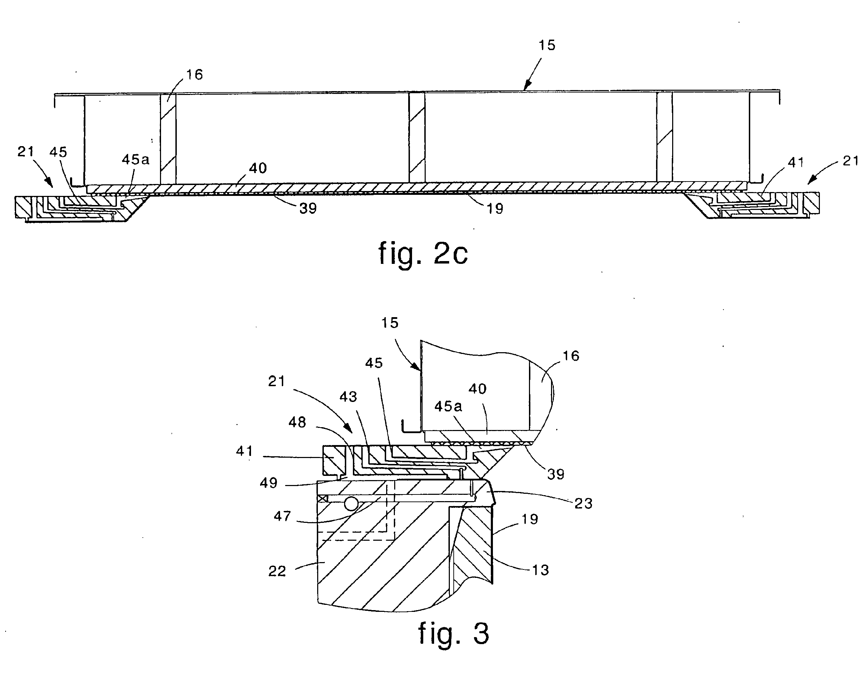

The heating assembly 15 (figs. 2a-2c) substantially comprises a bearing structure 16, of a substantially universal type, on which are assembled a heating element 39, an insulating element 40 and a specific frame 41 for gripping and pre-forming the film 19; by specific frame we mean an element that can be replaced so as to adapt to the specific sizes, forms and characteristics of the film to be thermoformed.

The bearing structure 16 is advantageously formed by metal sheets which facilitate a rapid dissipation and transfer of the heat produced by the heating element 39, and allow to couple the heating assembly 15 to movement means, such as for example a mechanical arm, a linear guide or otherwise, of a known type and not shown in the drawings. In this way, and thanks to its characteristics of gripping and holding the film, the heating assembly 15 can easily be displaced and transferred from a zone wherein the segment of film is prepared, to the delivery zone inside the mold in any direction whatsoever. In fact, the movement means can also be of the robotic type and allow to transport and handle the heating assembly 15, with the segment of film 19, in any position and with any spatial orientation, for example horizontal, vertical or inclined.

The movement means displace the heating assembly 15 from its first position outside the mold 30 to its second position inside the mold 30, and vice versa, in the way described hereafter.

The heating element 39, in this case and only to give an example, consists of a foil-type electric resistance, advantageously having different zones which can be regulated individually within a range of temperatures which can even reach values which can reach up to 220-250°C and more. The presence of such independent regulation zones allows a differentiated heating of the corresponding zones of the film 19 according to the specific piece to be covered and to the shape of the mold 30.

According to a variant, the heating element 39 is formed by a metal plate, advantageously made of aluminum, provided with a hydraulic circuit for water, or for diathermal oils. The insulating element 40 is located between the bearing structure 16 and the heating element 39, so that the latter does not overheat the bearing structure 16 excessively, and to increase the quantity of heat transmitted to the film 19 to be heated.

The specific frame 41 is associated on its perimeter with the lower part of the heating element 39 and is provided with an anchor device 21 to at least temporarily anchor the film 19 to the specific frame 41. The anchor device 21 holds the perimeter part of the film 19 adherent to the specific frame 41 (fig. 3) by means of first vacuum means comprising a pipe 43.

Second vacuum means, comprising a pipe 45, are selectively activated to pre-form upwards the segment of film 19, to guarantee constant contact of the whole surface with the heating element 39. This guarantees a uniform and complete heating of the film 19, without the formation of cold points and without any temperature gradients being generated. This is particularly important in the case of very thin films, for example with thicknesses in the range of 0.2-1 mm. The upward pre-forming also allows to possibly carry out thermoforming on the punch 12 instead of on the matrix 13. Another derived advantage is that, when the film 19 is inserted already pre-formed into the mold, the time needed to complete the thermoforming is considerably reduced.

The second pre-forming pipe 45 is arranged outside the portion of film 19 that will couple, in the mold, with the figure of the article. In this way, we prevent the formation of imprints or marks in the part which has the aesthetic finishing. Moreover, the peripheral suction guarantees a uniform pre-forming from the center towards the periphery.

The pipe 45 has an extension 45a (figs. 2a, 2b) in communication with the empty space 50 between the film 19 and the heating element 39. Once the film 19 has been picked up, and while it is being transported towards the mold 30, the pipe 45 is activated to create a depression in said space 50 so that the film 19 progressively pre-forms upwards; thanks to the peripheral position of the pipe 45, the pre-forming occurs progressively, starting from the center (figs. 2a, 2b) until it affects the whole peripheral zone of the film 19. At the end of the pre-forming operation, the film 19 to be inserted into the mold 30 is totally adherent to the heating element 39, thus allowing to reduce the time required to complete the thermoforming inside the mold 30.

Then, when the frame 41, inside the mold 30, rests on the ring-nut-22 to transfer the film 19, third vacuum means 47 on the ring-nut 22 are activated. According to a variant, the third vacuum means 47 are not present, but the film 19 is transferred by activating in an appropriate manner the first 43 and/or second 45 vacuum means, and/or the vacuum means associated with the elements of the mold.

In the subsequent step, before the film 19 is thermoformed, fourth vacuum means present on the frame 41 are finally activated; these comprise a conduit 48 and a chamber 49 which, by making the frame 41 adhere closely to the ring-nut 22, ensure that the film 19 is gripped on the perimeter; in this way the need to use complex and burdensome retaining elements of a mechanical type is avoided, and an efficacious treatment is guaranteed without the risk of ruining the film 19. In this case too, according to a variant, the vacuum means 48, 49 can be replaced by vacuum means present on the mold.

It should be noted that the first 43, third 47 and fourth 48 and 49 vacuum means are all arranged and act only outside the aesthetic part of the film 11 which will couple with the figure of the article, for the reasons identified above.

Once the film 19 has been firmly gripped on the perimeter, thermoforming is then carried out, by activating in a conventional manner the vacuum means present on the female part 13 of the mold 30, to make the film 19 adhere to the walls of the female part 13.

According to a variant which is not shown here, on the frame 41 there are means which can be selectively activated to release the vacuum between the film 19 and the heated plane, for example by making ambient air enter between the film 19 and the heating element 39; this allows to increase the speed of thermoforming and to reduce the possibility that the film 19 might cool down due to its prolonged contact with the inner walls of the female part 13.

It comes within the field of the present invention that single vacuum means, or a combination of two or more thereof, allow both to hold the perimeter part of the film 19 adherent to the specific frame 41 outside the mold 30, and also to pre-form upwards the segment of film 19, and also to transfer the film 19 from the frame 41 to the ring-nut 22, and also to make the frame 41 adhere closely to the ring-nut 22, and also to ensure the film 19 is gripped on the perimeter, and also to carry out the forming operation.

The cycle relating to the solution as described heretofore is as follows.

In fig. 4a, the ring-nut 22 and the heating assembly 15 are in a position outside the mold 30 and in proximity with the reel 20 which feeds the film 19. The heating assembly 15 is above the supporting plane 31. After a segment of film 19 of the desired size has been unwound, cut and arranged above the supporting plane 31, the anchor device 21 of the specific frame 41 is activated, in order to hold the film 19 in cooperation with the heating element 39, thanks to the first vacuum means 43.

By activating the second vacuum means 45, the film 19 deforms partly upwards, as can be seen in fig. 4b, pre-forming and increasing the surface of contact with the heating element 39, and possibly heats in a differentiated manner on the surface according to the regulations set by the heating element 39.

The heating assembly 15 and the ring-nut 22 are then translated simultaneously along a substantially horizontal plane (fig. 4b) to be taken to a position inside the mold 30, in an intermediate position between the female part 13 and the male part 12.

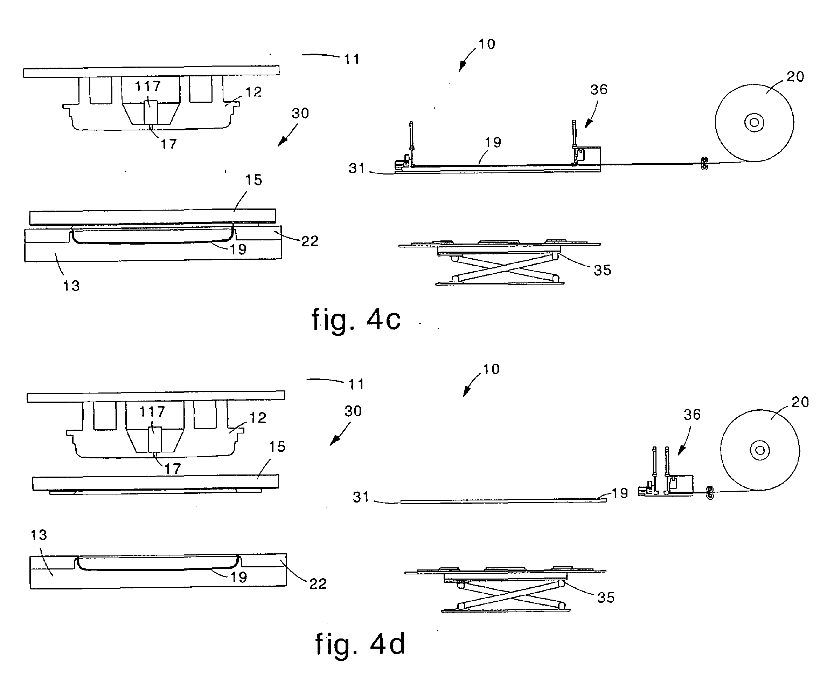

Subsequently (fig. 4c), the ring-nut 22 is lowered substantially to rest on and couple with the perimeter of the female part 13, or possibly of the male part 12, while the heating assembly 15 is in turn lowered so as to deposit the heated film 19 onto the ring-nut 22. The film 19 is transferred from the heating assembly 15 to the ring-nut 22 and held thereon by the possible third vacuum means 47.

During the transfer of the first segment of film 19 inside the mold 30, the unwinding and cutting means 36 can prepare a second segment of film 19 on the supporting plane 31. Then the anchor device 21 is de-activated and, since it is already heated and pre-formed, the film 19 is thermoformed in a relatively short time and made to adhere to the inner wall of the female part 13.

Before the thermoforming operation, the fourth vacuum means 48, 49 are activated, with the function of pressing the film on the perimeter. According to a variant that is not shown here, as we have said, the fourth vacuum means 48, 49 are not present and the function of pressing the film on the perimeter is performed by vacuum means present in the elements 13 or 12 of the mold 30. After the thermoforming operation, the heating assembly 15.is taken outside the mold 30 (fig. 4d).

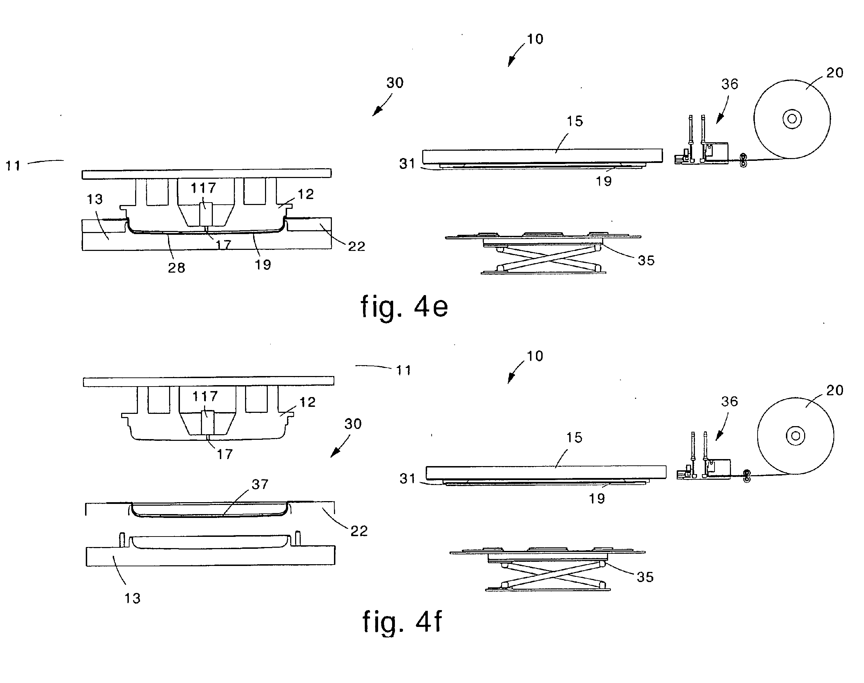

The subsequent step (fig. 4e) simultaneously provides, in the mold 30, to lower the male part 12 until the molding cavity 28 is defined with the female part 13 and, outside the mold 30, to associate a new segment of film 19 with the heating assembly 15. During this step, in the mold 30, the polyurethane material is also injected, in foam form, by means of the head 117 and the injection channel 17 inside the cavity 28 and, outside the mold 30, the step of heating the new segment of film 19 begins.

In this way, on the one hand the time required to thermoform the film 19 is reduced thanks to the pre-forming performed outside the mold 30, and on the other hand the time required for the polymerization of the polyurethane is used to heat the segment of film 19 to be used in the subsequent molding cycle, which leads to a considerable reduction in the overall times of the cycle.

The heat and pressure generated during the polymerization of the polyurethane complete the thermoforming of the film 19 and the definitive and stable fixture thereof to the outer surface of the article 37 being formed.

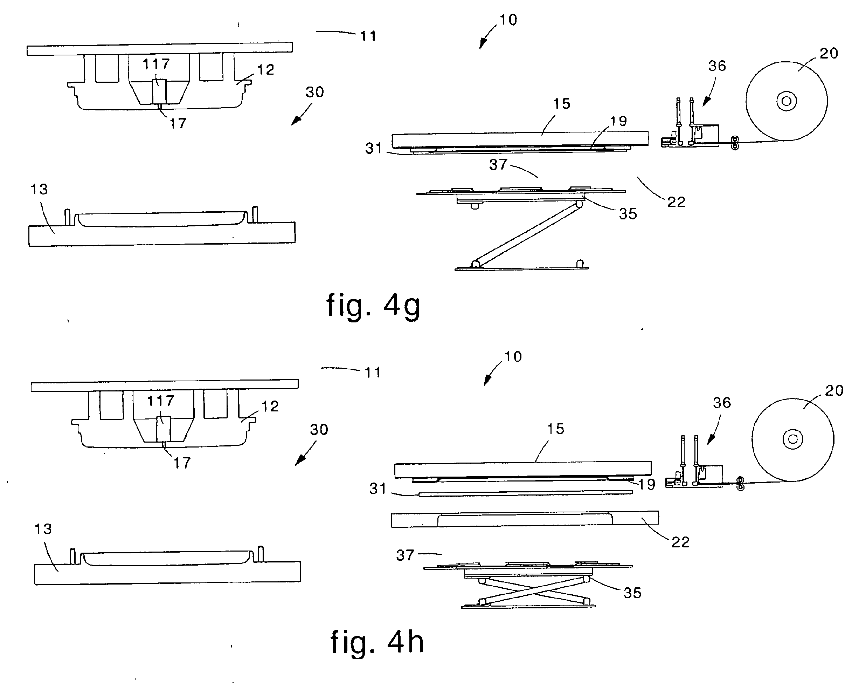

When the molding operation is finished, the mold 30 is opened (fig. 4f) and the annular ring-nut 22 is first raised, then translated laterally to its initial position, to allow the article 37 made to be extracted and removed by means of the discharge means 35 (fig. 4g). The article 37 remains resting on the ring-nut 22 due to the presence of the perimeter edge of the excess film 19. At the same time, the heating assembly 15 continues to heat and pre-form the new segment of film 19 which it will position in correspondence with the female part 13 so as to start a new production cycle.

The article 37 is sent from the discharge means 35 to a trimming station to trim the perimeter of the film 19, so as to complete the process and obtain the finished piece.

At this point (fig. 4h), we return to the condition shown in fig. 4a, thus starting a new production cycle for the next article, which cycle will be considerably shortened thanks to the fact that the film 19 is already in an optimum heated state.

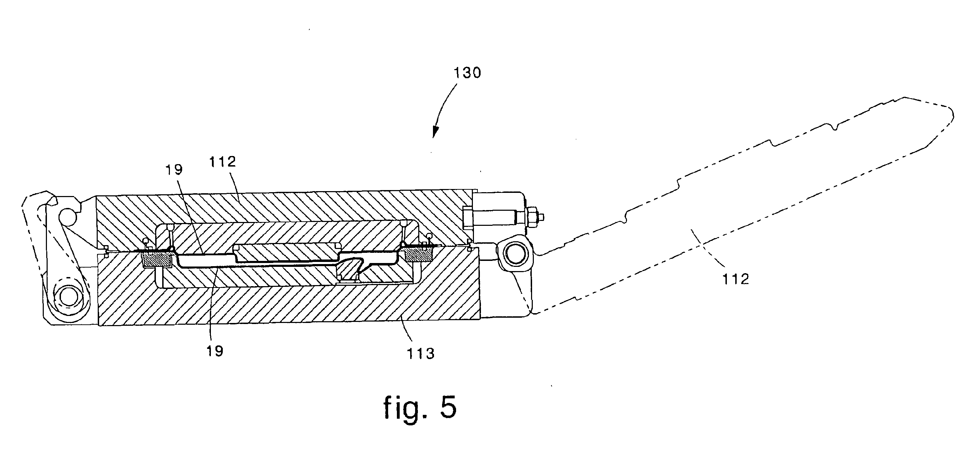

In figs. 5 to 7, the reference number 110 denotes generally a second form of embodiment of the device according to the present invention.

The device 110 comprises a molding apparatus 130 consisting of a female part 113, or matrix, and a male part 112, or punch, hinged together in this case at one end and able to be selectively opened/closed by means of movement actuators which are not shown here. The mold 130 is used for the production of polyurethane articles 137 covered on both sides by the film 19. This type of mold 130, as will be explained in more detail later, allows to position a relative segment of film 19 both on the female part 113 and also on the male part 112. The polyurethane is injected by means of an injection head 117, which in this case is autonomous with respect to the mold 130.

The device 110 also comprises the heating assembly 15, movable in this case between a loading position outside the mold 130 and a position of cooperation with the female part 113 and/or the male part 112.

This embodiment of the invention does not provide the ring-nut 22, and the front edge 23 is made directly inside the respective female part 113 or male part 112.

In this case, the production cycle occurs in the following way.

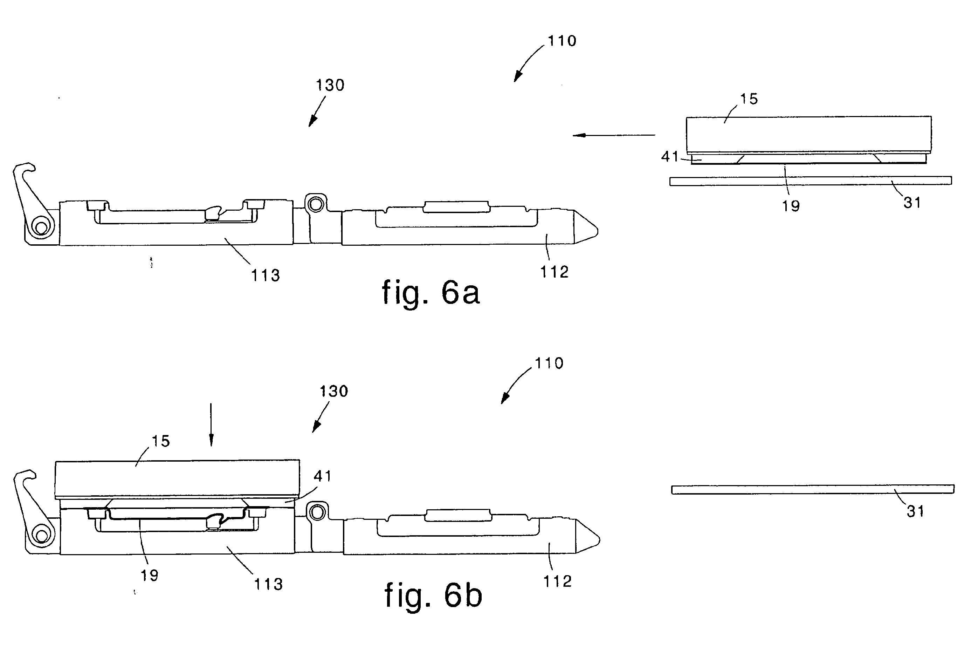

In fig. 6a, the mold 130 has the two parts, male part 112 and female part 113, in the open position, and the heating assembly 15 is in the loading position outside the mold 130 and near the reel which feeds the film 19.

As in the first embodiment, the film 19 is deposited above the supporting plane 31, and a segment of film 19 is determined and then cut, according to the size of the article 137 to be made.

The segment of film 19 is anchored to the specific frame 41 of the heating assembly 15, heated to a desired temperature and pre-formed upwards.

The heating assembly 15 is then translated (fig. 6b) to be taken to the position wherein it cooperates with the female part 113 of the mold 130, and positions on said female part 113 the anchored and thermoformed film 19.

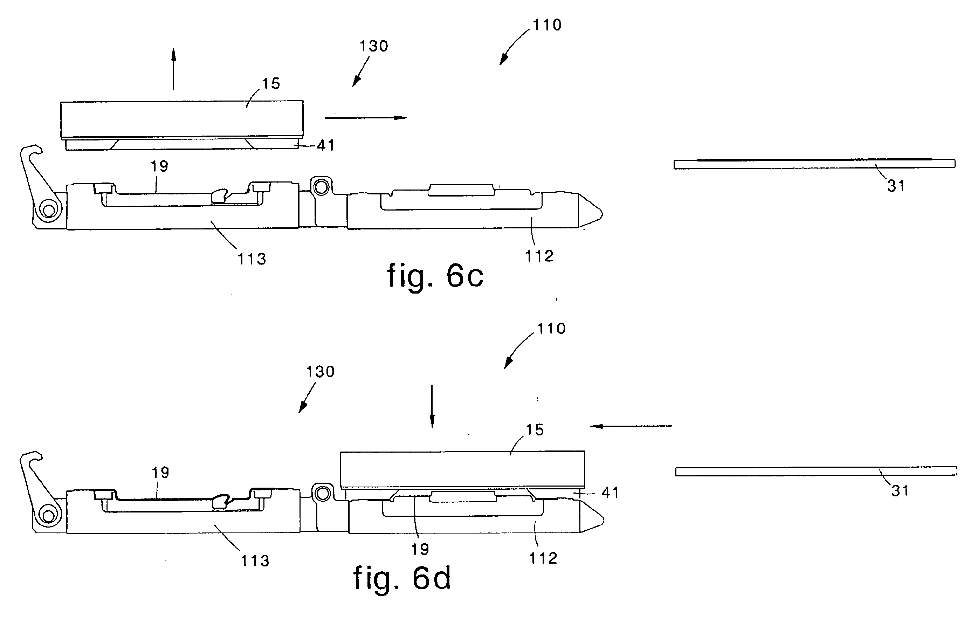

Subsequently, the heating assembly 15 is taken to the loading position (fig. 6c) to load a second segment of film 19, which has to be heated, pre-formed and positioned in correspondence with the male part 112, as happened for the first segment of film 19 positioned on the female part 113 (fig. 6d).

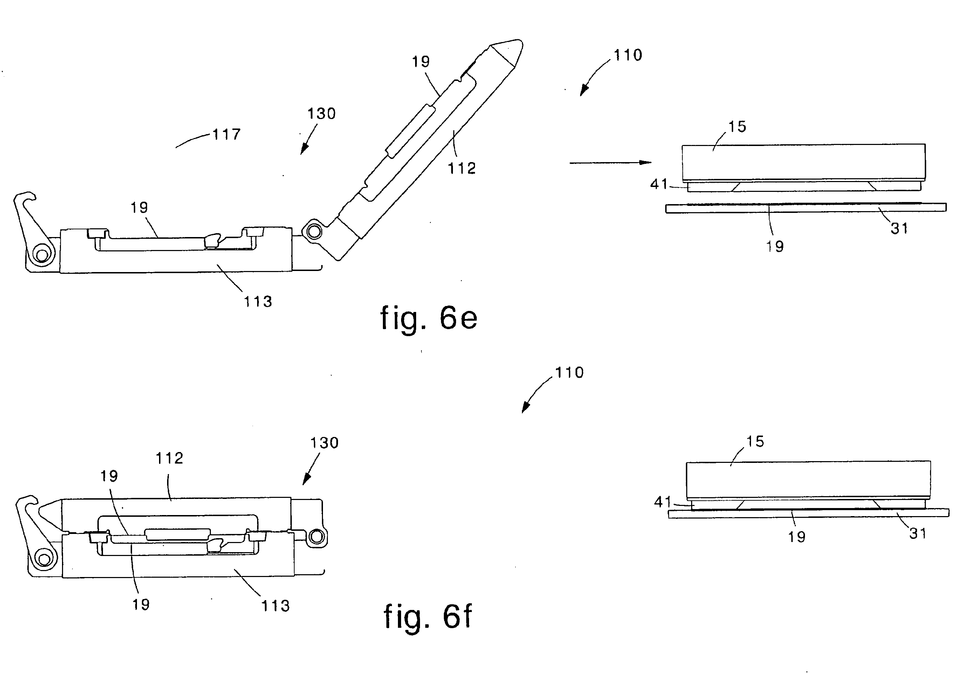

Once the second segment of film 19 has been positioned, the heating assembly 15 is taken outside the bulk of the mold 130 (fig. 6e) to the loading position and, at the same time, the polyurethane is cast by means of the injection head 117.

The next step (fig. 6f) provides to simultaneously close the male part 112 onto the female part 113, to associate a new segment of film 19 with the specific frame 41 of the heating assembly 15 and to begin the heating step of said new segment of film 19.

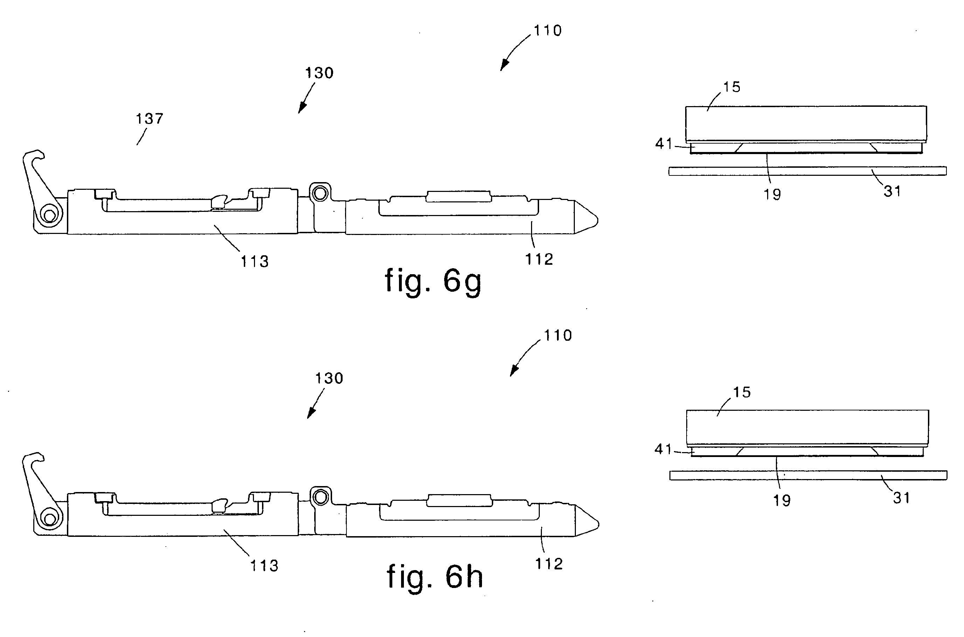

When the molding operation has finished, the mold 130 is opened (fig. 6g) and, by means of extractor means not shown in the drawings, the article 137 made is extracted. At the same time the heating assembly 15 has heated and pre-formed upwards the new segment of film 19 (fig. 6h) which it will then position in correspondence with the female part 113, as in step 5b, so as to start a new production cycle.

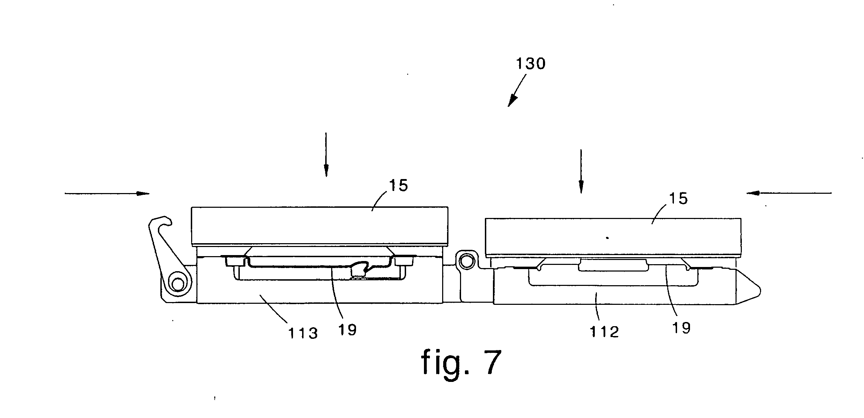

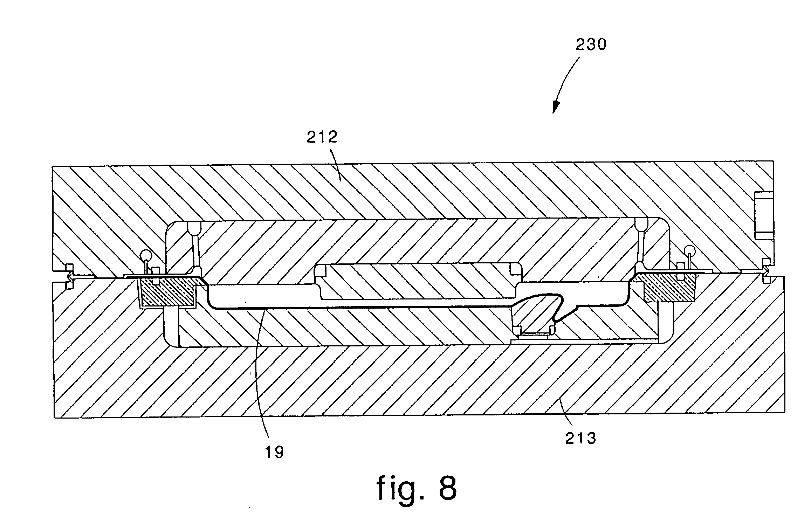

According to the variant shown in fig. 7, two heating assemblies 15 are provided able to heat and pre-form upwards two respective films 19, and then transfer them, one into the male part 112 of the mold 130 and the other into the female part 113, so as to further reduce the dead times of the production cycle and consequently the costs. In figs. 8 to 9f, the reference number 210 denotes generally a third form of embodiment of the device according to the present invention.

The device 210 differs from the device 110 as previously described in the conformation of the mold 230 and due to the fact that the article 237 produced is of the single-film type. The mold 230 comprises a female part 213 or matrix, and a male part 212, or punch, free from each other and able to be selectively opened/closed by means of movement actuators which are not shown here. The polyurethane is injected by means of the injection head 217, which in this case too is autonomous with respect to the mold 230.

The heating assembly 15 is also movable between the same positions as described for the previous embodiment, with the single difference that the film 19 is transferred only into the female part 213 of the mold 230.

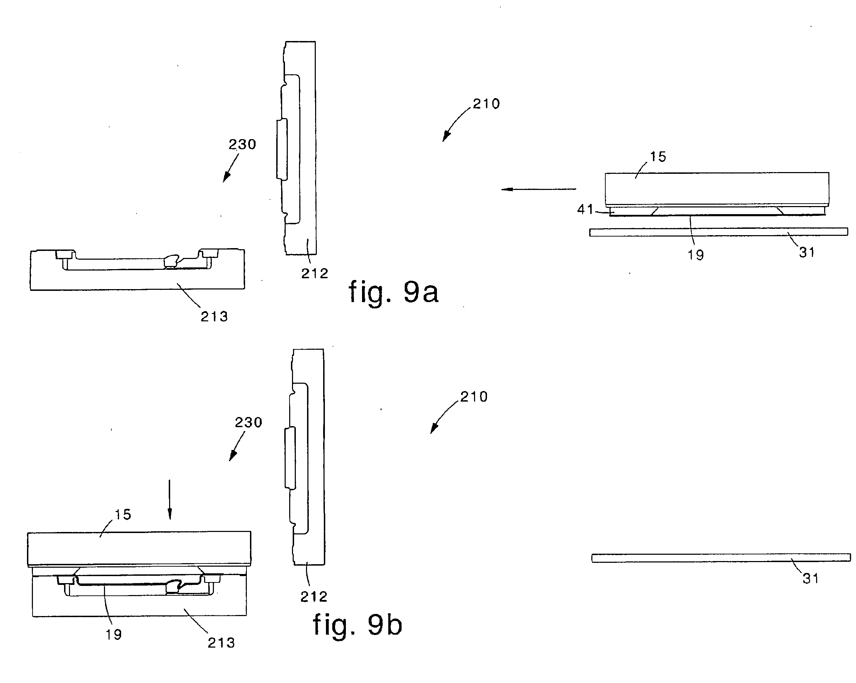

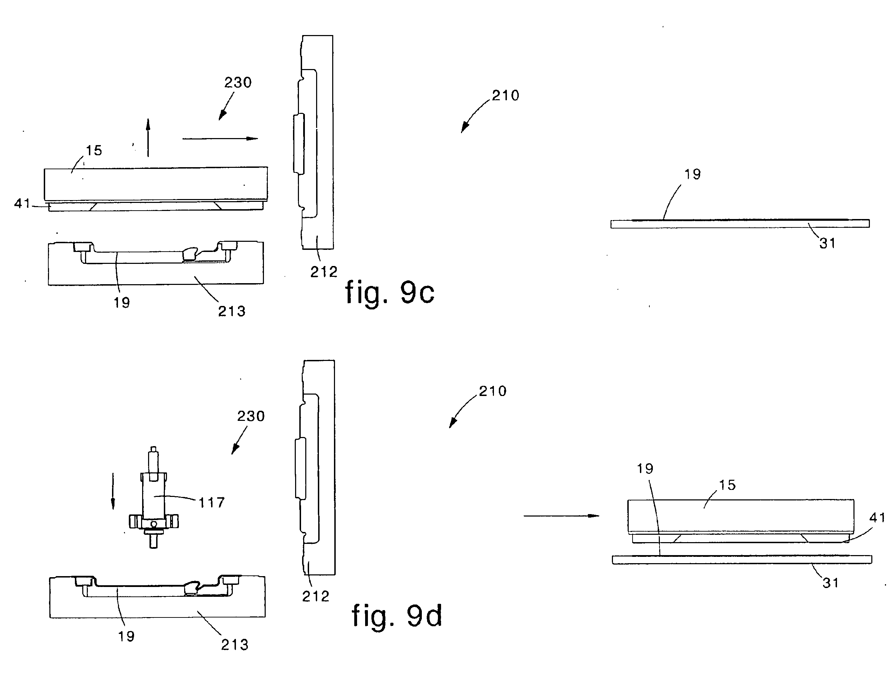

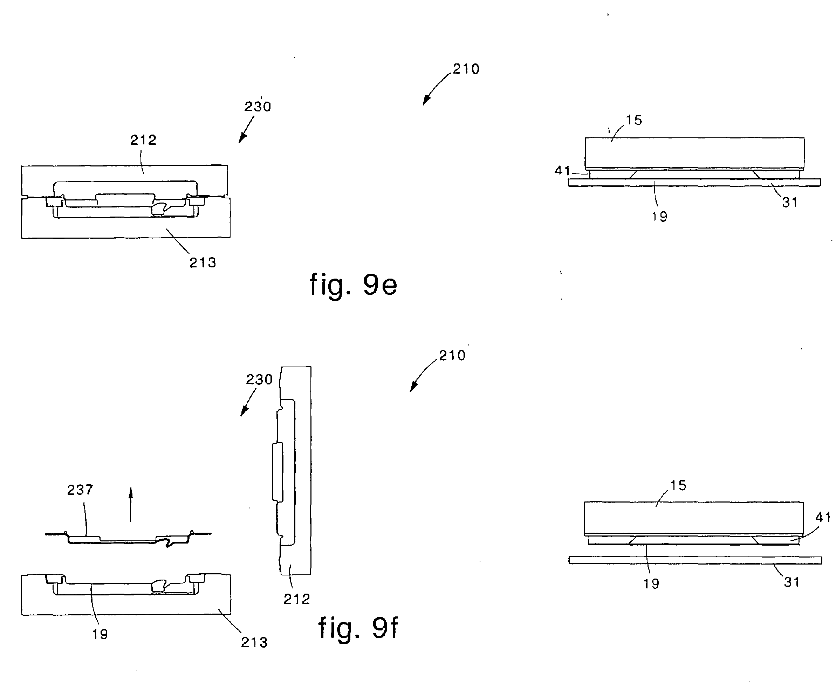

Consequently the production cycle of this embodiment, as shown in figs. 9a-9f, differs from the one described previously for the device 110 only in that no step of positioning the heated and pre-formed film 19 into the male part 212 is performed.

The mold 230 can also be suitable for the simultaneous achievement of two or more adjacent figures, and will in turn provide auxiliary shearing means to separate the film 19 in correspondence with an intermediate position of said two figures.

It also comes within the field of the invention to provide that a single press comprises, apart from two or more figures, also two or more molds activated simultaneously.

## Claims

1. Method to produce in a mold (30, 130, 230) plastic articles (37, 137, 237) covered on at least one side by at least a film (19), wherein plastic material is introduced inside a molding cavity (28) defined by the coupling of a first part (12, 112, 212) and a second part (13, 113, 213) of said mold (30, 130, 230), wherein a step is provided wherein said film (19) is made to adhere to at least one zone of at least one of said first (12, 112, 212) or said second part (13, 113, 213) of said mold, wherein a heating step is provided to heat at least one part or segment of said film (19) which precedes the step wherein said film (19) is made to adhere to said zone of one of said parts (12, 112, 212; 13, 113, 213), said heating step being performed, by means of at least a movable heating assembly (15), in an intermediate position between a first position outside said mold (30, 130, 230) and a second position associated with said mold (30, 130, 230), whereby in said heating step said film (19) is also at least partly pre-formed by selectively activating vacuum means (45) associated with said heating assembly (15), **characterized in that** said articles are polyurethane articles, said plastic material is polyurethane and **in that** said vacuum means (45) that perform the pre-forming are arranged and act only on the perimeter portion of the segment of film (19) which is outside with respect to the figure of the article and which, during the completion of the cycle, is trimmed and eliminated.

2. Method as in claim 1, **characterized in that** said pre-forming step is performed in coherence with the subsequent thermoforming step carried out inside the mold (30) in order to reduce the time required for said subsequent thermoforming step.

3. Method as in claim 1 or 2, **characterized in that**, while the polyurethane is introduced into and polymerized in the mold (30) in order to achieve a first article (37) covered with a first film (19), outside the mold (30) a second film (19) for a second article (37) is subjected to heating by the heating assembly (15).

4. Method as in any claim hereinbefore, **characterized in that** in association with the perimeter edge of said second part (13) ring-nut means (22) are arranged in order to position a film (19) inside said mold (30).

5. Method as in any claim hereinbefore, **characterized in that** said first part (112) and said second part (113) are hinged together and are closed in book-like manner in order to make articles (137) covered on both sides by films (19).

6. Method as in claim 5, **characterized in that** said heating step provides a first sub-step wherein a first film (19) is heated and positioned in cooperation with said first part (112), and a second sub-step wherein a second film (19) is heated and positioned in cooperation with said second part (113).

7. Method as in any claim hereinbefore, **characterized in that** said first part (212) and said second part (213) are unconstrained from each other and are superimposed so as to make articles (237) covered by a film (19) on one side only.

8. Method as in claim 7, **characterized in that** said heating step provides a first sub-step wherein a first heated film (19) is positioned in cooperation with said second part (213), and a second sub-step wherein a second film (19) is heated and pre-formed outside said mold (230).

9. Method as in any claim hereinbefore, **characterized in that**, at least in the coupling step of said film (19) and said heating assembly (15), it provides to selectively activate first vacuum means (43) provided at least on the periphery of said heating assembly (15).

10. Method as in any claim hereinbefore, **characterized in that**, before and during the thermoforming step of the film (19) inside said mold (30, 130, 230), it provides that vacuum means (48, 49) provided at least on the periphery of said heating assembly (15) are activated to retain the film (19) on the perimeter, said film (19) being pressed between the heating assembly (15) and the perimeter edge of the mold (30, 130, 230) and are then released, possibly introducing ambient air.

11. Method as in claim 1, **characterized in that** said pre-formed film (19) is associated with a part conformed as a punch of said mold (30).

12. Method as in any claim hereinbefore, **characterized in that** said heating assembly (15) is supplied with at least an insulating element (40).

13. Device to produce polyurethane articles (37, 137, 237) covered on at least one side by at least a film (19), said device comprising at least a mold (30, 130, 230) provided with a first part (12, 112, 212) and a second part (13, 113, 213) able to define between them a molding cavity (28) inside which polyurethane material is able to be introduced, the device also comprising a movable heating assembly (15) able to heat said film (19), before it is inserted into the mold (30, 130, 230), and to position said heated film (19) in cooperation with said first (12, 112, 212) or second (13, 113, 213) part of said mold (30, 130, 230), whereby said heating assembly (15) comprises a bearing structure (16) on which are mounted at least a heating element (39) and a frame (41) able to support anchor means (21) to anchor, at least temporarily, said film (19) to said heating assembly (15), said frame (41) including vacuum means (45) able to be selectively activated to make a substantial part of the surface of said film (19) adhere to said heating element (39) and perform an at least partial pre-forming of said film (19), charachterized in that said vacuum means (45) that achieve the pre-forming are arranged and act only on the perimeter portion of the segment of film (19) which is outside with respect to the figure of the article and which, during the completion of the cycle, is trimmed and eliminated.

14. Device as in claim 13, **characterized in that** said vacuum means (45) are able to pre-form said film (19) so as to allow it to couple with the male-type part (12, 112, 212) of said mold (30, 130, 230).

15. Device as in claim 13, **characterized in that** said heating assembly (15) comprises at least one insulating element (40) cooperating with said heating element (39).

16. Device as in claim 13, **characterized in that** said frame (41) is of the replaceable type according to the type and size of said segment of film (19) to be heated and pre-formed.

17. Device as in claim 13, **characterized in that** said heating element (39) is of the at least partly plane type.

18. Device as in claim 13, **characterized in that** said heating element (39) comprises an electric resistance.

19. Device as in claim 13, **characterized in that** said heating element (39) comprises a metal plate provided with a hydraulic circuit for a heating liquid such as water or diathermal oil.

20. Device as in claim 13, **characterized in that** said anchor means (21) comprise vacuum means (43) able to be selectively activated to couple said film (19) to said frame (41).

21. Device as in claims 13, **characterized in that** said anchor means (21) comprise vacuum means able to be activated at least before and during the pre-forming step of said film (19).

22. Device as in claim 21, **characterized in that** it comprises means for the selective release of the vacuum, able to introduce ambient air between said film (19) and said heating element (39) in order to accelerate the adhesion of the film to said zone of one of said parts of the mold (30, 130, 230).

23. Device as in claim 13, **characterized in that** it comprises ring-nut means (22) movable between a first position outside said mold (30) and a second position at least partly superimposed over the perimeter of one (13) of said parts of said mold (30), wherein said heating assembly (15) is movable between a first position outside said mold (30), wherein it heats said film (19), and a second position inside said mold (30), wherein it deposits said film (19) on said ring-nut means (22).

24. Device as in claim 13, **characterized in that** said anchor means (21) comprise vacuum means (43, 45, 47, 48, 49) able to be selectively activated before and during the thermoforming of said film (19) inside said mold (30, 130, 230).

25. Device as in claim 13, **characterized in that** said first part (112) and said second part (113) are hinged together and able to close in book-like manner in order to make polyurethane articles (137) covered on both sides by relative films (19), wherein said heating assembly (15) is movable from a first position wherein it first heats and then positions a first film (19) in cooperation with said first part (112), and a second position wherein it first heats and then positions a second film (19) in cooperation with said second part (113).

26. Device as in claim 13, **characterized in that** said first male part (212) and said second female part (213) are unconstrained and able to be superimposed in order to make polyurethane articles (237) covered on a single side by a relative film (19), wherein said heating assembly (15) is movable from a first position cooperating with said mold (230), wherein it positions a first heated and pre-formed film (19) in cooperation with said second part (213), and a second position outside said mold (230), wherein it heats and possibly pre-forms a second film (19).

27. Device as in claim 13, **characterized in that** said heating element (39) includes zones of independent regulation in order to heat different zones of said film (19) in differentiated manner.

28. Device as in claim 13, **characterized in that** it comprises a mold suitable for the simultaneous formation of two figures, cutting means being provided in an intermediate position between said two figures in order to cut said film (19) into sections.

29. Device as in claim 13, **characterized in that** said heating assembly (15) is associated with handling/positioning means which allow to transport and move said heating assembly (15) into any horizontal, vertical or inclined position.

## Patentansprüche

1. Verfahren zum Herstellen von Kunststoffgegenständen (37, 137, 237), die auf mindestens einer Seite durch mindestens einen Film (19) bedeckt sind, in einem Formwerkzeug (30, 130, 230), wobei Kunststoffmaterial in einen Formhohlraum (28) eingeleitet wird, der durch das Koppeln eines ersten Teils (12, 112, 212) und eines zweiten Teils (13, 113, 213) des Formwerkzeugs (30, 130, 230) gebildet wird, wobei ein Schritt existiert, in dem dafür gesorgt wird, dass der Film (19) an mindestens einer Zone des ersten Teils (12, 112, 212) und/oder des zweiten Teils (13, 113, 213) des Formwerkzeugs anhaftet, wobei ein Heizschritt dergestalt existiert, dass mindestens ein Teil oder ein Segment des Films (19) erwärmt wird, wobei dieser dem Schritt vorangeht, indem dafür gesorgt wird, dass der Film (19) an einem der Teile (12, 112, 212; 13, 113, 213) anhaftet, wobei dieser Heizschritt durch mindestens eine bewegliche Heizanordnung (15) in einer Zwischenposition zwischen einer ersten Position außerhalb des Formwerkzeugs (30, 130, 230) und einer zweiten Position, die dem Formwerkzeug (30, 130, 230) zugeordnet ist, ausgeführt wird, wobei in diesem Heizschritt der Film (19) auch zumindest teilweise **dadurch** vorgeformt wird, dass eine der Heizanordnung (15) zugeordnete Unterdruckeinrichtung (45) selektiv aktiviert wird, **dadurch gekennzeichnet, dass** die Gegenstände Polyurethangegenstände sind, das Kunststoffmaterial Polyurethan ist und die Unterdruckeinrichtung (45), die das Vorformen ausführt, am Umfangsabschnitt des Segments des Films (19), das außerhalb in Bezug auf die Form des Gegenstands angeordnet ist und, während des Abschlusses des Zyklus, abgeschnitten und beseitigt wird, angeordnet ist und nur auf diesen einwirkt.

2. Verfahren nach Anspruch 1, **dadurch gekennzeichnet, dass** der Vorformungsschritt in Übereinstimmung mit dem folgenden Thermoformungsschritt ausgeführt wird, der innerhalb des Formwerkzeugs (30) ausgeführt wird, um die Zeit zu verringern, die für diesen anschließenden Thermoformungsschritt benötigt wird.

3. Verfahren nach einem der Ansprüche 1 oder 2, **dadurch gekennzeichnet, dass** während das Polyurethan in das Formwerkzeug (30) eingeleitet wird und in ihm polymerisiert, um einen ersten Gegenstand (37) zu erhalten, der mit einem ersten Film (19) bedeckt ist, außerhalb des Formwerkzeugs (30) ein zweiter Film (19) für einen zweiten Gegenstand (37) einem Heizvorgang durch die Heizanordnung (15) unterzogen wird.

4. Verfahren nach einem der vorstehenden Ansprüche, **dadurch gekennzeichnet, dass** in Zuordnung mit dem Umfangsrand des zweiten Teils (13) eine Ringmuttereinrichtung (22) angeordnet wird, um einen Film (19) innerhalb des Formwerkzeugs (30) zu positionieren.

5. Verfahren nach einem der vorstehenden Ansprüche, **dadurch gekennzeichnet, dass** der erste Teil (112) und der zweite Teil (113) miteinander scharniermäßig verbunden sind und sie buchartig geschlossen werden, um Gegenstände (137) herzustellen, die auf beiden Seiten mit Filmen (19) bedeckt sind.

6. Verfahren nach Anspruch 5, **dadurch gekennzeichnet, dass** der Heizschritt über einen ersten Unterschritt, in dem ein erster Film (19) erwärmt wird und in Zusammenwirkung mit dem ersten Teil (112) positioniert wird, und einen zweiten Unterschritt verfügt, in dem ein zweiter Film (19) erwärmt wird und in Zusammenwirkung mit dem zweiten Teil (113) positioniert wird.

7. Verfahren nach einem der vorstehenden Ansprüche, **dadurch gekennzeichnet, dass** der erste Teil (212) und der zweite Teil (213) nicht gegeneinander verspannt werden und sie so überlagert werden, dass Gegenstände (237) hergestellt werden, die nur auf einer Seite durch einen Film (19) bedeckt sind.

8. Verfahren nach Anspruch 7, **dadurch gekennzeichnet, dass** der Heizschritt über einen ersten Unterschritt, in dem ein erster erwärmter Film (19) in Zusammenwirkung mit dem zweiten Teil (213) positioniert wird, und einen zweiten Unterschritt verfügt, in dem ein zweiter Film (19) erwärmt und außerhalb des Formwerkzeugs (230) vorgeformt wird.

9. Verfahren nach einem der vorstehenden Ansprüche, **dadurch gekennzeichnet, dass** zumindest im Kopplungsschritt des Films (19) und der Heizanordnung (15) dafür gesorgt wird, die erste Unterdruckeinrichtung (43) selektiv zumindest am Umfang der Heizanordnung (15) zu aktivieren.

10. Verfahren nach einem der vorstehenden Ansprüche, **dadurch gekennzeichnet, dass** vor und während des Thermoformungsschritts des Film (19) innerhalb des Formwerkzeugs (30, 130, 230) dafür gesorgt wird, dass eine Unterdruckeinrichtung, die zumindest am Umfang der Heizanordnung (15) vorhanden ist, aktiviert wird, um den Film (19) am Umfang zu halten, wobei der Film (19) zwischen der Heizanordnung (15) und dem Umfangsrand des Formwerkzeugs (30, 130, 230) angedrückt wird und dann freigegeben wird, um möglicherweise Umgebungsluft einzulassen.

11. Verfahren nach Anspruch 1, **dadurch gekennzeichnet, dass** der vorgeformte Film (19) einem Teil zugeordnet wird, der als Stempel des Formwerkzeugs (30) ausgebildet ist.

12. Verfahren nach einem der vorstehenden Ansprüche, **dadurch gekennzeichnet, dass** die Heizanordnung (15) mit mindestens einem Isolierelement (40) versehen wird.

13. Vorrichtung zum Herstellen von Polyurethangegenständen (37, 137, 237), die an mindestens einer Seite mit mindestens einem Film (19) bedeckt sind, wobei diese Vorrichtung über mindestens ein Formwerkzeug (30, 130, 230) verfügt, das mit einem ersten Teil (12, 112, 212) und einem zweiten Teil (13, 113, 213) versehen ist, die zwischen sich einen Formhohlraum (28) bilden können, in den Polyurethanmaterial eingeleitet werden kann, wobei die Vorrichtung auch über eine bewegliche Heizanordnung (15) verfügt, die den Film (19) erwärmen kann, bevor er in das Formwerkzeug (30, 130, 230) eingesetzt wird, und um diesen erwärmten Film (19) in Zusammenwirkung mit dem ersten Teil (12, 112, 212) oder dem zweiten Teil (13, 113, 213) des Formwerkzeugs (30, 130, 230) zu positionieren, wobei die Heizanordnung (15) über eine Lagerungsstruktur (16) verfügt, auf der zumindest ein Heizelement (39) und ein Rahmen (41) montiert sind, der eine Verankerungseinrichtung (21) halten kann, um den Film (19), zumindest teilweise, an der Heizanordnung (15) zu verankern, wobei der Rahmen (41) über eine Unterdruckeinrichtung (45) verfügt, die selektiv aktiviert werden kann, um dafür zu sorgen, dass ein wesentlicher Teil der Oberfläche des Films (19) am Heizelement (39) anhaftet, und um zumindest teilweise ein Vorformen des Films (19) auszuführen, **dadurch gekennzeichnet, dass** die Unterdruckeinrichtung (45), die das Vorformen bewerkstelligt, nur am Umfangsabschnitt desjenigen Segments des Films (19) angeordnet ist und auf diesen einwirkt, der außerhalb in Bezug auf die Form des Gegenstands liegt und, während des Abschlusses des Zyklus, abgeschnitten und beseitigt wird.

14. Vorrichtung nach Anspruch 13, **dadurch gekennzeichnet, dass** die Unterdruckeinrichtung (45) den Film (19) so vorformen kann, dass er mit dem eingreifenden Teil (12, 112, 212) des Formwerkzeugs (30, 130, 230) verbunden werden kann.

15. Vorrichtung nach Anspruch 13, **dadurch gekennzeichnet, dass** die Heizanordnung (15) über mindestens ein Isolierelement (40) in Zusammenwirkung mit dem Heizelement (39) verfügt.

16. Vorrichtung nach Anspruch 13, **dadurch gekennzeichnet, dass** der Rahmen (41) entsprechend dem Typ und der Größe des zu erwärmenden und vorzuformenden Segments des Films (19) von austauschbarem Typ ist.

17. Vorrichtung nach Anspruch 13, **dadurch gekennzeichnet, dass** das Heizelement (39) zumindest teilweise von ebenem Typ ist.

18. Vorrichtung nach Anspruch 13, **dadurch gekennzeichnet, dass** das Heizelement (39) über einen elektrischen Widerstand verfügt.

19. Vorrichtung nach Anspruch 13, **dadurch gekennzeichnet, dass** das Heizelement (39) über eine Metallplatte verfügt, die mit einem Hydraulikkreis versehen ist, um eine Flüssigkeit wie Wasser oder Diathermalöl zu erwärmen.

20. Vorrichtung nach Anspruch 13, **dadurch gekennzeichnet, dass** die Verankerungseinrichtung (41) über eine Unterdruckeinrichtung (43) verfügt, die selektiv aktiviert werden kann, um den Film (19) mit dem Rahmen (41) zu verbinden.

21. Vorrichtung nach Anspruch 13, **dadurch gekennzeichnet, dass** die Verankerungseinrichtung (21) über eine Unterdruckeinrichtung verfügt, die zumindest vor und während des Vorformungsschritts für den Film (19) aktiviert werden kann.

22. Vorrichtung nach Anspruch 21, **dadurch gekennzeichnet, dass** sie über eine Einrichtung zum selektiven Aufheben des Unterdrucks verfügt, um Umgebungsluft zwischen dem Film (19) und das Heizelement (39) einleiten zu können, um das Anhaften des Films an der Zone eines der Teile des Formwerkzeugs (30, 130, 230) zu beschleunigen.

23. Vorrichtung nach Anspruch 13, **dadurch gekennzeichnet, dass** sie über eine Ringmuttereinrichtung (22) verfügt, die zwischen einer ersten Position außerhalb des Formwerkzeugs (30) und einer zweiten Position beweglich ist, in der sie zumindest teilweise dem Umfang eines (13) der Teile des Formwerkzeugs (30) überlagert ist, wobei die Heizanordnung (15) zwischen einer ersten Position außerhalb des Formwerkzeugs (30), wo sie den Film (19) erwärmt, und einer zweiten Position innerhalb des Formwerkzeugs (30) beweglich ist, wo sie den Film (19) auf der Ringmuttereinrichtung (22) ablegt.

24. Vorrichtung nach Anspruch 13, **dadurch gekennzeichnet, dass** die Verankerungseinrichtung (21) über eine Unterdruckeinrichtung (43, 45, 47, 48, 49) verfügt, die vor und während des Thermoformens des Films (19) innerhalb des Formwerkzeugs (30, 130, 230) selektiv aktiviert werden kann.

25. Vorrichtung nach Anspruch 13, **dadurch gekennzeichnet, dass** der erste Teil (112) und der zweite Teil (113) scharniermäßig miteinander verbunden sind und buchartig geschlossen werden können, um Polyurethangegenstände (137) herzustellen, die auf beiden Seiten durch jeweilige Filme (19) bedeckt sind, wobei die Heizanordnung (15) von einer ersten Position, in der sie einen ersten Film (19) in Zusammenwirkung mit dem ersten Teil (112), erwärmt und dann positioniert, und einer zweiten Position beweglich ist, in der sie einen zweiten Film (19) zuerst erwärmt und dann in Zusammenwirkung mit dem zweiten Teil (113) positioniert.

26. Vorrichtung nach Anspruch 13, **dadurch gekennzeichnet, dass** der erste eingreifende Teil (212) und der zweite aufnehmende Teil (213) nicht gegeneinander verspannt werden und sie überlagert werden können, um Polyurethangegenstände (237) herzustellen, die auf einer einzelnen Seite durch einen zugehörigen Film (19) bedeckt sind, wobei die Heizanordnung (15) von einer ersten Position in Zusammenwirkung mit dem Formwerkzeug (230), in der sie einen ersten erwärmten vorgeformten Film (19) in Zusammenwirkung mit dem zweiten Teil (213) positioniert, und einer zweiten Position außerhalb des Formwerkzeugs (230) beweglich ist, in der sie einen zweiten Film (19) erwärmt und möglicherweise vorformt.

27. Vorrichtung nach Anspruch 13, **dadurch gekennzeichnet, dass** das Heizelement (39) über Zonen unabhängiger Regelung verfügt, um verschiedene Zonen des Films (19) auf unterschiedliche Weise zu erwärmen.

28. Vorrichtung nach Anspruch 13, **dadurch gekennzeichnet, dass** sie über ein Formwerkzeug verfügt, das gleichzeitig zwei Formen ausbilden kann, wobei an einer Zwischenposition zwischen den zwei Formen eine Schneideinrichtung vorhanden ist, um den Film (19) in Abschnitte zu zerschneiden.

29. Vorrichtung nach Anspruch 13, **dadurch gekennzeichnet, dass** der Heizanordnung (15) eine Handhabungs-/Positioniereinrichtung zugeordnet ist, die es ermöglicht, die Heizanordnung (15) in jede beliebige horizontale, vertikale oder geneigte Position zu transportieren und zu bewegen.

## Revendications

1. Procédé destiné à produire dans un moule (30, 130, 230) des articles en plastique (37, 137, 237) recouverts sur au moins un côté par au moins un film (19), dans lequel la matière plastique est introduite à l'intérieur d'une cavité de moulage (28) définie par l'accouplement d'une première partie (12, 112, 212) et d'une seconde partie (13, 113, 213) dudit moule (30, 130, 230), procédé dans lequel il est prévu une étape consistant à faire adhérer ledit film (19) à au moins une zone de l'une au moins de ladite première (12, 112, 212) ou de ladite seconde partie (13, 113, 213) dudit moule, dans lequel il est prévu une étape de chauffage pour chauffer au moins une partie ou un segment dudit film (19) avant l'étape consistant à faire adhérer ledit film (19) à ladite zone de l'une desdites parties (12, 112, 212 ; 13, 113, 213), ladite étape de chauffage étant réalisée au moyen d'au moins un organe de chauffage mobile (15), dans une position intermédiaire entre une première position à l'extérieur dudit moule (30, 130, 230) et une seconde position associée audit moule (30, 130, 230), et où, dans ladite étape de chauffage, ledit film (19) est aussi au moins partiellement préformé en actionnant sélectivement des moyens de mise sous vide (45) associés audit organe de chauffage (15), **caractérisé en ce que** lesdits articles sont des articles en polyuréthane, ladite matière plastique est le polyuréthane et **en ce que** lesdits moyens de mise sous vide (45) qui effectuent le préformage sont installés et n'agissent que sur le périmètre du segment de film (19) qui se trouve à l'extérieur par rapport à la figure de l'article et qui, une fois le cycle terminé, est ébavuré et éliminé.

2. Procédé selon la revendication 1, **caractérisé en ce que** ladite étape de préformage est effectuée en cohérence avec l'étape ultérieure de thermoformage, menée à l'intérieur du moule (30) afin de réduire le temps nécessaire à ladite étape ultérieure de thermoformage.

3. Procédé selon la revendication 1 ou 2, **caractérisé en ce que**, pendant que le polyuréthane est introduit et polymérisé dans le moule (30) afin d'obtenir un premier article (37) recouvert par un premier film (19), un second film (19) destiné à un second article (37) est mis à chauffer à l'extérieur du moule (30) dans l'organe de chauffage (15).

4. Procédé selon l'une quelconque des revendications ci-dessus, **caractérisé en ce qu'**en association avec le périmètre de ladite seconde pièce (13), des écrous annulaires (22) sont installés afin de positionner un film (19) à l'intérieur dudit moule (30).

5. Procédé selon l'une quelconque des revendications ci-dessus, **caractérisé en ce que** ladite première partie (112) et ladite seconde partie (113) sont articulées entre elles et se referment à la façon d'un livre, afin de recouvrir des articles (137) des deux côtés par des films (19).

6. Procédé selon la revendication 5, **caractérisé en ce que** ladite étape de chauffage prévoit une première sous-étape dans laquelle un premier film (19) est chauffé et positionné en coopération avec ladite première partie (112), et une seconde sous-étape dans laquelle un second film (19) est chauffé et positionné en coopération avec ladite seconde partie (113).

7. Procédé selon l'une quelconque des revendications ci-dessus, **caractérisé en ce que** ladite première partie (212) et ladite seconde partie (213) ne sont pas contraintes l'une à l'autre et sont superposées de manière à recouvrir des articles (237) par un film (19) d'un seul côté.

8. Procédé selon la revendication 7, **caractérisé en ce que** ladite étape de chauffage prévoit une première sous-étape dans laquelle un premier film chauffé (19) chauffé est positionné en coopération avec ladite seconde partie (213), et une seconde sous-étape dans laquelle un second film (19) est chauffé et préformé à l'extérieur dudit moule (230).

9. Procédé selon l'une quelconque des revendications ci-dessus, **caractérisé en ce que**, au moins lors de l'étape d'accouplement dudit film (19) et dudit organe de chauffage (15), il prévoit d'actionner sélectivement des premiers moyens de mise sous vide (43) prévus au moins à la périphérie dudit organe de chauffage (15).

10. Procédé selon l'une quelconque des revendication ci-dessus, **caractérisé en ce que**, avant et pendant l'étape de thermoformage du film (19) à l'intérieur dudit moule (30, 130, 230), il prévoit l'actionnement de moyens de mise sous vide (48, 49) prévus au moins à la périphérie dudit organe de chauffage (15) afin de retenir le film (19) sur le périmètre, ledit film (19) étant comprimé entre l'organe de chauffage (15) et le périmètre du moule (30, 130, 230), puis le vide est ensuite cassé en introduisant éventuellement de l'air ambiant.

11. Procédé selon la revendication 1, **caractérisé en ce que** ledit film préformé (19) est associé à une partie ayant la forme d'un poinçon dudit moule (30).

12. Procédé selon l'une quelconque des revendications ci-dessus, **caractérisé en ce que** ledit organe de chauffage (15) est dotée d'au moins un élément isolant (40).

13. Dispositif de production d'articles en polyuréthane (37, 137, 237) recouverts sur au moins un côté par au moins un film (19), ledit dispositif comportant au moins un moule (30, 130, 230) doté d'une première partie (12, 112, 212) et d'une seconde partie (13, 113, 213) aptes à définir entre elles une cavité de moulage (28) à l'intérieur de laquelle peut être introduit la matière polyuréthane, le dispositif comportant aussi un organe de chauffage mobile (15) apte à chauffer ledit film (19) avant son introduction dans le moule (30, 130, 230), et à positionner ledit film chauffé (19) en coopération avec ladite première (12, 112, 212) ou ladite seconde partie (13, 113, 213) dudit moule (30, 130, 230), ledit organe de chauffage (15) comportant une structure porteuse (16) sur laquelle sont montés au moins un élément chauffant (39) et un bâti (41) apte à supporter des moyens d'ancrage (21) pour ancrer, au moins temporairement, ledit film (19) audit organe de chauffage (15), ledit bâti (41) comprenant des moyens de mise sous vide (45) pouvant être sélectivement actionnés pour faire adhérer une partie substantielle de la surface dudit film (19) audit élément chauffant (39) et pour effectuer un préformage au moins partiel dudit film (19), **caractérisé en ce que** lesdits moyens de mise sous vide (45) qui réalisent le préformage sont installés et n'agissent que sur le périmètre du segment de film (19) qui se trouve à l'extérieur par rapport à la figure de l'article et qui, une fois le cycle terminé, est ébavuré et éliminé.

14. Dispositif selon la revendication 13, **caractérisé en ce que** lesdits moyens de mise sous vide (45) sont aptes à préformer ledit film (19) de manière à lui permettre de s'accoupler à la partie mâle (12, 112, 212) dudit moule (30, 130, 230).

15. Dispositif selon la revendication 13, **caractérisé en ce que** ledit organe de chauffage(15) comprend au moins un élément isolant (40) coopérant avec ledit élément chauffant (39).

16. Dispositif selon la revendication 13, **caractérisé en ce que** ledit bâti (41) peut être interverti selon le type et la dimension dudit segment de film (19) à chauffer et préformer.

17. Dispositif selon la revendication 13, **caractérisé en ce que** ledit élément chauffant (39) est du type au moins partiellement plat.

18. Dispositif selon la revendication 13, **caractérisé en ce que** ledit élément chauffant (39) comprend une résistance électrique.

19. Dispositif selon la revendication 13, **caractérisé en ce que** ledit élément chauffant (39) comprend une plate de métal dotée d'un circuit hydraulique pour un liquide chauffant tel que l'eau ou l'huile diathermique.

20. Dispositif selon la revendication 13, **caractérisé en ce que** lesdits moyens d'ancrage (21) comportent des moyens de mise sous vide (43) pouvant être actionnés sélectivement pour accoupler ledit film (19) audit bâti (41).

21. Dispositif selon la revendication 13, **caractérisé en ce que** lesdits moyens d'ancrage (21) comportent des moyens de mise sous vide pouvant être actionnés au moins avant et pendant l'étape de préformage dudit film (19).

22. Dispositif selon la revendication 21, **caractérisé en ce qu'**il comporte des moyens permettant de casser sélectivement le vide, en introduisant de l'air ambiant entre ledit film (19) et ledit élément chauffant (39) afin d'accélérer l'adhérence du film à ladite zone de l'une desdites parties du moule (30, 130, 230).

23. Dispositif selon la revendication 13, **caractérisé en ce qu'**il comporte des écrous annulaires (22) mobiles entre une première position à l'extérieur dudit moule (30) et une seconde position au moins partiellement superposée au périmètre de l'une (13) desdites parties dudit moule (30), dans lequel ledit organe de chauffage (15) est mobile entre une première position à l'extérieur dudit moule (30), où il chauffe ledit film (19), et une seconde position à l'intérieur dudit moule (30), où il dépose ledit film (19) sur lesdits écrous annulaires (22).

24. Dispositif selon la revendication 13, **caractérisé en ce que** lesdits moyens d'ancrage (21) comportent des moyens de mise sous vide (43, 45, 47, 48, 49) pouvant être actionnés sélectivement avant et pendant le thermoformage dudit film (19) à l'intérieur dudit moule (30, 130, 230).

25. Dispositif selon la revendication 13, **caractérisé en ce que** ladite première partie (112) et ladite seconde partie (113) sont articulées entre elles et aptes à se fermer à la façon d'un livre afin de recouvrir des articules en polyuréthane (137) des deux côtés par des films correspondants (19), dans lequel ledit organe de chauffage (15) est mobile entre une première position où il chauffe d'abord puis positionne ensuite un premier film (19) en coopération avec ladite première partie (112), et une seconde position où il chauffe d'abord puis positionne ensuite un second film (19) en coopération avec ladite seconde partie (113).

26. Dispositif selon la revendication 13, **caractérisé en ce que** ladite première partie mâle (212) et ladite seconde partie femelle (213) ne sont pas contraintes et peuvent se superposer afin de recouvrir des articles en polyuréthane (237) d'un seul côté par un film correspondant (19), dans lequel ledit organe de chauffage (15) est mobile entre une première position coopérant avec ledit moule (230), où il positionne un premier film chauffé et préformé (19) en coopération avec ladite seconde partie (213), et une seconde position à l'extérieur dudit moule (230), où il chauffe et éventuellement préforme un second film (19).

27. Dispositif selon la revendication 13, **caractérisé en ce que** ledit élément chauffant (39) comprend des zones de réglage indépendant afin de chauffer différentes zones dudit film (19) de différentes façons.

28. Dispositif selon la revendication 13, **caractérisé en ce qu'**il comporte un moule approprié à la formation simultanée de deux figures, des moyens de découpe étant prévus en position intermédiaire entre lesdites deux figures afin de découper ledit film (19) en morceaux.

29. Dispositif selon la revendication 13, **caractérisé en ce que** ledit organe de chauffage (15) est associé à des moyens de manutention/positionnement qui permettent de transporter et de déplacer ledit organe de chauffage (15) dans une quelconque position horizontale, verticale ou inclinée.
